# EUROPÄISCHE PATENTSCHRIFT

(11) **EP 2 588 293 B1**
(45) Veröffentlichungstag und Bekanntmachung des Hinweises auf die Patenterteilung: **19.03.2014**
(21) Anmeldenummer: 11725775.8
(22) Anmeldetag: 20.06.2011
(51) Int. Cl.: B29C 47/88, B29C 47/20

(54) **VORRICHTUNG ZUM ERZEUGEN EINES HOHLEN KUNSTSTOFFPROFILES**
DEVICE FOR GENERATING A HOLLOW PLASTIC PROFILE
DISPOSITIF DE PRODUCTION D'UN PROFILÉ CREUX EN MATIÈRE PLASTIQUE

(30) Priorität: 29.06.2010 DE 102010025524
(43) Veröffentlichungstag der Anmeldung: 08.05.2013
(73) Patentinhaber: KraussMaffei Technologies GmbH, 80997 München (DE)
(72) Erfinder: SCHNEIDER, Florian Johannes, 83340 Bergen (DE)
(74) Vertreter: Wilhelm, Ludwig
(86) Internationale Anmeldenummer: PCT/EP2011/060209
(87) Internationale Veröffentlichungsnummer: WO 2012/000817

(56) Entgegenhaltungen:
- WO-A1-2006/134228
- WO-A2-2010/029143
- JP-A- 2000 263 629

## Beschreibung

Die Erfindung betrifft eine Vorrichtung zum Erzeugen eines hohlen Kunststoffprofiles, insbesondere eines Kunststoffrohres, mit einem Extrusionswerkzeug mit einem die Extrusionsachse umgebenden Schmelzekanal, einem das Extrusionswerkzeug mit Kunststoffschmelze speisenden Extruder sowie einer Absaugvorrichtung zum Absaugen von Luft durch das Profilinnere entgegen der Extrusionsrichtung sowie ein entsprechendes Verfahren.

Luftführungssysteme zur Rohrinnenkühlung sind aus dem Stand der Technik, beispielsweise DE 10 2008 047 207 A1 und DE 10 2008 047 211 A1 bekannt oder insbesondere JP 2000 263 629 A die als nächstliegender Stand der Technik angesehen wird. Dabei wird Luft durch das Rohrinnere entgegen der Extrusionsrichtung gesaugt, um so das Rohr zu kühlen. Bei bekannten Systemen ist die Luftabsaugung durch das Profil zentral vor dem Extrusionswerkzeug, beispielsweise einem Rohrkopf, angeordnet und weist das Extrusionswerkzeug selbst einen Durchbruch auf, um die Luft bis zum Ende der Extrusionslinie durchsaugen zu können, so dass die Schmelzeeinspeisung seitlich erfolgen muss. Dies hat zum einen fertigungstechnische Nachteile, da das Extrusionswerkzeug mit einem entsprechenden Durchbruch versehen werden muss und die erforderliche seitliche Zuführung der Schmelze zu einer aufwändigeren Werkzeugkonstruktion führt. Zum anderen bedingt dies auch verfahrenstechnische Nachteile, da aufgrund der seitlichen Schmelzezuführung beispielsweise der Druckverbrauch steigt und Spülzeiten, z. B. bei Farbwechsel, länger werden, aber auch die homogene Schmelzeverteilung über den Umfang des Rohres erschwert wird, was außerdem zu Qualitätseinbußen führen kann.

Aufgabe der vorliegenden Erfindung ist es daher, eine Vorrichtung zum Erzeugen eines hohlen Kunststoffprofiles, insbesondere eines Kunststoffrohres, mit einem Luftführungssystem zur Rohrinnenkühlung bereitzustellen, welche eine einfachere Konstruktion, verbesserte Verfahrenseigenschaften sowie eine bessere Rohrqualität ermöglicht, sowie ein entsprechendes Verfahren.

Gelöst wird diese Aufgabe durch eine oben genannte Vorrichtung zum Erzeugen eines hohlen Kunststoffprofiles, insbesondere eines Kunststoffrohres, wobei der Extruder das Extrusionswerkzeug zentral speist und die Absaugvorrichtung ein innerhalb des Schmelzekanals angeordnetes zentrales Absaugrohr sowie Teilstromabsaugkanäle umfasst, welche sich in Absaugrichtung an das zentrale Absaugrohr anschließen und aus dem Inneren des Extrusionswerkzeuges herausführen, sowie ein entsprechendes Verfahren.

Dabei liegt der Erfindung der Gedanke zugrunde, ein Extrusionswerkzeug mit einer zentralen Schmelzeeinspeisung, bei der also der Extruderflansch zentral vor dem Extrusionswerkzeug angeordnet ist und die Schmelze von vorn in das Extrusionswerkzeug einspeist, bereitzustellen, welche gleichzeitig über ein Luftführungssystem zur Rohrinnenkühlung verfügt, das sich bis zum Ende der Extrusionslinie erstreckt, indem der Luftstrom in Teilströme aufgeteilt wird, die den Extruderflansch umgehen.

In einer bevorzugten Ausgestaltung verlaufen die Teilstromabsaugkanäle in im Extrusionswerkzeug, insbesondere in einem Wendelverteiler, vorgesehenen Versorgungsbohrungen. Dies hat den Vorteil, dass keine zusätzlichen Herstellungsschritte notwendig sind und die vorhandene Struktur des Extrusionswerkzeugs genutzt werden kann.

Vorteilhafterweise umfasst die erfindungsgemäße Vorrichtung eine Absaugeinheit zur Erzeugung eines Luftstromes durch das Profilinnere. Bei der Absaugeinheit kann es sich beispielsweise um einen Seitenkanalverdichter handeln, welcher beispielsweise im Vergleich zu einem Ventilator wesentlich höhere Differenzdrücke erzeugen kann.

In einer bevorzugten Ausgestaltung münden die Teilstromabsaugkanäle in einem Sammelabsaugkanal, der mit der Absaugeinheit verbunden ist. Je kürzer die Teilströme sind, desto geringer ist der Druckverlust im Absaugsystem. Daher ist es vorteilhaft, die Teilstromabsaugkanäle alsbald wieder zusammenzuführen.

In einer weiteren bevorzugten Ausgestaltung umfasst die erfindungsgemäße Vorrichtung eine Regelvorrichtung zum Regeln der Leistung der Absaugeinheit in Abhängigkeit von der Temperatur des von ihr erzeugten Luftstromes. Dabei ist vorteilhafterweise vorgesehen, dass ein Temperatursensor innerhalb des Luftstromes angeordnet ist und mit der Regelvorrichtung in Verbindung steht. Auf diese Weise ist es möglich, den Grad der Luftkühlung zu regulieren, was zu einer zusätzlichen Qualitätsverbesserung des Kunststoffprofiles führt, da der Kühlprozess auf sich ändernde Randbedingungen angepasst werden kann und somit ein konstantes Eigenspannungsprofil erreicht werden kann. Randbedingungen sind beispielsweise der Massedurchsatz, die Nennrohrwandstärke, der Rohrdurchmesser oder die Umgebungslufttemperatur.

Mit der Erfindung werden also neben einer einfacheren Konstruktion und dadurch bedingten fertigungstechnischen Vorteilen verbesserte Verfahrenseigenschaften, wie z.B. ein geringerer Druckverbrauch und kürzere Spülzeiten, bei besserer Rohrqualität erreicht. Dabei verursacht die erfindungsgemäße Vorrichtung nicht nur geringere Herstellkosten und geringeren Montageaufwand, sondern hat auch einen geringeren Platzbedarf.

Die Erfindung wird nachfolgend anhand eines Ausführungsbeispiels und unter Bezugnahme auf die Zeichnungen näher erläutert.
- Fig. 1a, b,c: zeigen drei Ansichten einer erfindungsgemäßen Vorrichtung gemäß einem Ausführungsbeispiel.
- Fig. 2: zeigt einen Ausschnitt einer erfindungsgemäßen Absaugvorrichtung gemäß einem Ausführungsbeispiel.

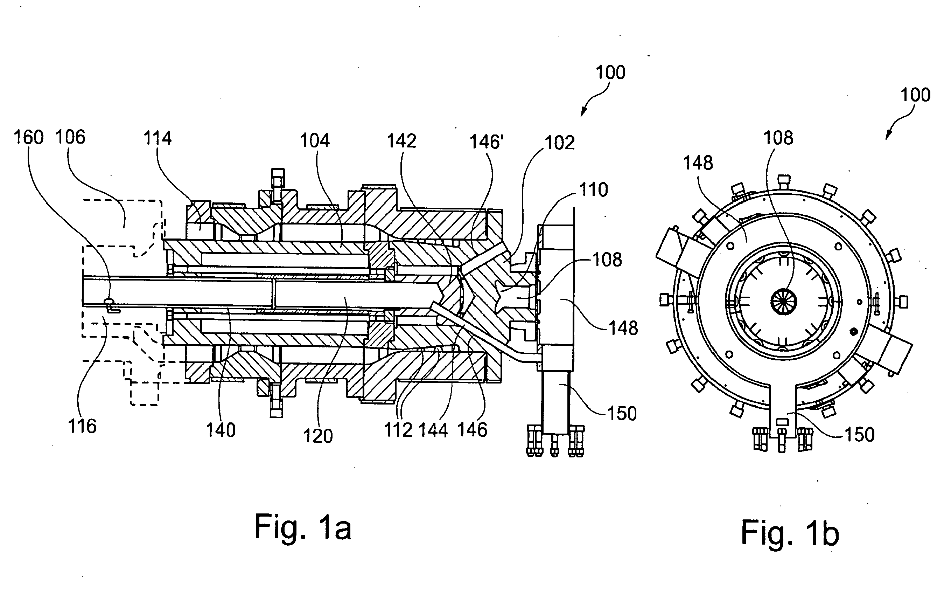

Fig. 1a zeigt in einer vereinfachten Seitenansicht ein Extrusionswerkzeug 100, hier einen Wendelverteilerrohrkopf, mit in Extrusionsrichtung aufeinanderfolgend einem Wendelverteiler 102, einem Dorn- und Düsenanschlussstück 104 sowie einem Düsensatz 106. Der Wendelverteiler 102 umfasst eine Anströmöffnung 108, im Wesentlichen sternförmig angeordnete Schmelzevorverteilungskanäle 110 sowie Wendelverteilerkanäle 112. An die Wendelverteilerkanäle 112 schließt sich im Dorn- und Düsenanschlussstück 104 sowie im Düsensatz 106 ein Schmelzekanal 114 an, welcher die Extrusionsachse 120 radial umgibt. Der Düsensatz 106 ist vorteilhafterweise austauschbar, um verschiedene Rohrdimensionen realisieren zu können.

In der Figur nicht dargestellt ist ein Extruder mit einem Extruderflansch, welcher mit der Anströmöffnung 108 verbunden ist und in diese die Kunststoffschmelze einspeist. Der Extruderflansch, wie auch die Anströmöffnung 102, sind dabei zentral auf der Extrusionsachse 120 angeordnet, es handelt sich also um eine zentrale Einspeisung. Die Kunststoffschmelze wird aus dem nicht dargestellten Extruderflansch in die Anströmöffnung 102 eingespeist, von dort in die Schmelzevorverteilungskanäle 110 und weiter in die Wendelverteilerkanäle 112 geleitet. In den Wendelverteilerkanälen 112 wird die Schmelze auf eine homogene, hohle Form gebracht und in den Schmelzekanal 114 geleitet, aus welchem sie dann durch den Düsensatz 106 als Rohr austritt.

Das Extrusionswerkzeug 100 umfasst außerdem eine Absaugvorrichtung zum Absaugen von Luft durch das Profil- bzw. Rohrinnere entgegen der Extrusionsrichtung. Die Absaugvorrichtung umfasst in Absaugrichtung ein zentrales Absaugrohr 140, ein Verteilerstück 142, Teilstromabsaugkanäle 144, einen Sammelabsaugkanal 148, in welchen die Teilstromabsaugkanäle 144 münden und welcher über einen Absaugstutzen 150 mit einer in den Figuren nicht dargestellten Absaugeinheit, bspw. einem Seitenkanalverdichter, verbunden ist.

Das zentrale Absaugrohr 140 erstreckt sich innerhalb des Schmelzekanals 114 in etwa vom Werkzeugdorn 116 des Düsensatzes 106 bis in den Wendelverteiler 102 nahezu an die Versorgungsbohrungen 146, 146' heran. Die Länge des zentralen Absaugrohres kann variieren - es muss nicht bündig mit dem Extrusionswerkzeug abschließen, sondern kann auch länger oder kürzer sein. Bevorzugt ist jedoch, dass das zentrale Absaugrohr etwas länger ist als der Werkzeugdorn. Ein teleskopierbares zentrales Absaugrohr bietet zudem Vorteile, da es leicht an die Dimension verschiedener Düsensätze anpassbar ist. Das zentrale Absaugrohr muss nicht rund sein, ein runder Querschnitt bietet sich jedoch bei einem Rohrkopf an. Dann ist es auch vorteilhaft, wenn das zentrale Absaugrohr auf der Extrusionsachse angeordnet ist, so dass der radiale Abstand zum Schmelzekanal gleichmäßig ist und eine gleichmäßige Innenkühlung des Rohres erfolgt. Das zentrale Absaugrohr 140 ist innerhalb eines Hohlraumes im Extrusionswerkzeug 100 angeordnet. Eine thermische Trennung zwischen dem zentralen Absaugrohr 140 und den umgebenden Bestandteilen des Extrusionswerkzeuges 100 muss nicht zwingend bestehen, ist aber in diesem Ausführungsbeispiel vorgesehen.

In diesem Ausführungsbeispiel erstrecken sich die Teilstromabsaugkanäle 144 in den Versorgungsbohrungen 146 des Wendelverteilers und führen aus dem Inneren des Extrusionswerkzeuges 100, hier insbesondere des Wendelverteilers 102, heraus. Es müssen jedoch nicht in allen Versorgungsbohrungen Teilstromabsaugkanäle verlaufen. Fig. 1a zeigt beispielsweise eine Versorgungsbohrung 146, in welcher ein Teilstromabsaugkanal 144 vom zentralen Absaugrohr 140 bis zum Sammelabsaugkanal 148 verläuft, und eine Versorgungsbohrung 146' ohne Teilstromabsaugkanal. Die Versorgungsbohrungen 146, 146' verlaufen sternförmig in entgegengesetzter Richtung zwischen den Schmelzevorverteilungskanälen 110. Mit anderen Worten führen die Teilstromabsaugkanäle 144 bzw. die Versorgungsbohrungen 146 entgegen der Extrusionsrichtung radial von der Extrusionsachse weg, während die Schmelzevorverteilungskanäle 110 entgegen der Extrusionsrichtung radial auf die Extrusionsachse zu führen.

Die Teilstromabsaugkanäle müssen nicht zwingend in den Versorgungsbohrungen verlaufen; in einer alternativen Ausführung können die Teilstromabsaugkanäle separat angeordnet sein. Wenn die Teilstromabsaugkanäle nicht an den Verlauf der Versorgungsleitungen gebunden sind, sondern eigens angelegt werden, kann der Winkel der Teilstromabsaugkanäle zur Extrusionsachse so gewählt werden, dass in Kombination mit der Länge der Teilströme möglichst geringe Druckverluste auftreten.

In einer weiteren alternativen Ausführung kann eine thermische Trennung zwischen Teilstromabsaugkanälen und Versorgungsbohrungen, z.B. durch in den Versorgungsbohrungen angeordnete, isolierte (z.B. auch durch Luftspalt) Rohre oder Schläuche, vorgesehen sein.

Das Verteilerstück 142 stellt die Verbindung zwischen zentralem Absaugrohr 140 und Teilstromabsaugkanälen 144 her. Verteilerstück 142 und zentrales Absaugrohr 140 können auch integral ausgestaltet sein. Insbesondere wenn die Versorgungsbohrungen 146 selbst die Teilstromabsaugkanäle 144 darstellen, kommt dem Verteilerstück 142 die Funktion eines Adapters zu.

Um die Druckverluste zu minimieren sollten die Teilströme möglichst kurz sein. Daher sollte das Verteilerstück 142 ebenfalls so ausgestaltet sein, dass die Teilströme möglichst kurz gehalten werden. Aus dem gleichen Grund sollten die Teilstromabsaugkanäle 144 auch ausgangsseitig kurz gehalten werden und möglichst unmittelbar nach Austreten aus dem Wendelverteiler 102 im Sammelabsaugkanal 148 zusammengefasst werden.

In den Figuren nicht dargestellt ist eine Regelvorrichtung zur Regelung der Leistung der ebenfalls nicht dargestellten Absaugeinheit. In Fig. 1a ist jedoch ein Temperatursensor 160 am Eingang des zentralen Absaugrohres 140 skizziert, welcher den Istwert der Temperatur des Luftstromes im zentralen Absaugrohr 140 feststellt und an die Regelvorrichtung übermittelt, so dass die Regelvorrichtung die Leistung der Absaugeinheit in Abhängigkeit von der festgestellten Temperatur des Luftstromes regeln kann. Bei einem Seitenkanalverdichter als Absaugeinheit wird beispielsweise dessen Drehzahl geregelt und hierüber der Luftvolumenstrom in der Absaugvorrichtung. Der Sollwert der Temperatur des Luftstromes kann beispielsweise in Abhängigkeit von Rohrdurchmesser, Durchsatz, Nennrohrwandstärke festgelegt werden. Zu den Rohrparametern passende Sollwerte können abrufbar in einem Speicher der Regelvorrichtung abgelegt sein, so dass die Auswahl eines Sollwertes automatisch erfolgen kann. Durch die Regelung können z. B. Schwankungen der Eingangslufttemperatur bzw. Umgebungslufttemperatur ausgeglichen werden. Der Temperatursensor kann natürlich auch an einer anderen Position innerhalb der Absaugvorrichtung angebracht sein. Eine geeignete Position des Temperatursensors lässt sich beispielsweise über kalorische Mittelung berechnen. Es ist ebenfalls denkbar, mehrere Temperatursensoren vorzusehen.

Fig. 1b zeigt eine Ansicht des Extrusionswerkzeugs 100 in Extrusionsrichtung. Gleiche Elemente sind mit gleichen Bezugszeichen versehen.

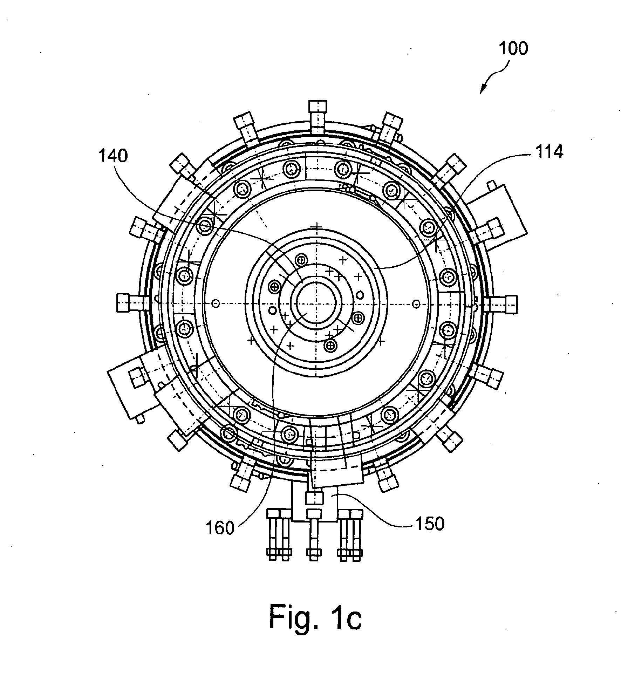

Fig. 1 c zeigt eine Ansicht des Extrusionswerkzeugs 100 in Absaugrichtung. Gleiche Elemente sind wiederum mit gleichen Bezugszeichen versehen. Besonders gut erkennbar sind beispielsweise das zentrale Absaugrohr 140 und der angedeutete Temperatursensor 160.

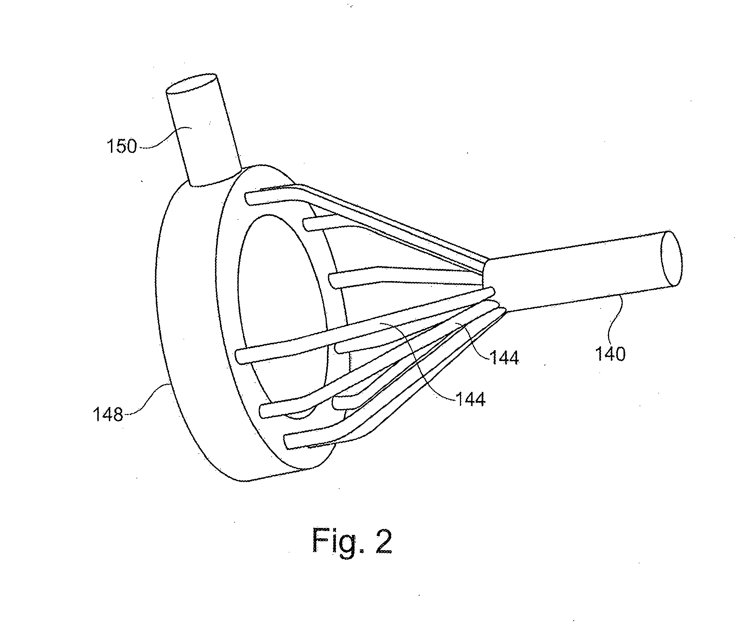

Fig. 2 zeigt einen vereinfachten Ausschnitt einer erfindungsgemäßen Absaugvorrichtung in räumlicher Ansicht. Gleiche Elemente sind wieder mit gleichen Bezugszeichen wie in Fig. 1 a, b, c versehen. Die Figur veranschaulicht, wie die Teilstromabsaugkanäle 144 sternförmig auseinanderlaufen. Während also die Schmelzevorverteilungskanäle 110 einen einzelnen, auf der Extrusionsachse 120 ankommenden Schmelzestrang so auseinanderführen, dass ein Hohlkörper entstehen kann, führen die Teilstromabsaugkanäle 144 den aus dem zentralen Absaugrohr 140 ankommenden Luftstrom in entgegengesetzter Richtung so auseinander, dass die Luft aus dem Inneren des Extrusionswerkzeuges 100 heraus geführt wird. Um die Druckverluste in der Absaugung möglichst gering zu halten, ist es wünschenswert, die Anzahl der Teilstromabsaugkanäle ebenfalls möglichst gering zu halten, jedoch groß genug, damit ihr kumulierter Querschnitt den ankommenden Luftstrom aus dem zentralen Absaugrohr aufnehmen kann.

Mit der erfindungsgemäßen Vorrichtung und dem Verfahren werden also eine einfachere Konstruktion und verbesserte Verfahrenseigenschaften erreicht und auf diese Weise nicht nur Herstellungs- und Montagekosten verringert, sondern auch eine höhere Energieeffizienz und eine bessere Rohrqualität ermöglicht.

### Bezugszeichenliste

- 100: Extrusionswerkzeug
- 102: Wendelverteiler
- 104: Dorn- und Düsenanschlussstück
- 106: Düsensatz
- 108: Anströmöffnung
- 110: Schmelzevorverteilungskanäle
- 112: Wendelverteilerkanäle
- 114: Schmelzekanal
- 116: Werkzeugdorn
- 120: Extrusionsachse
- 140: zentrales Absaugrohr
- 142: Verteilerstück
- 144: Teilstromabsaugkanäle
- 146, 146': Versorgungsbohrungen
- 148: Sammelabsaugkanal
- 150: Absaugstutzen
- 160: Temperatursensor

## Patentansprüche

1. Vorrichtung zum Erzeugen eines hohlen Kunststoffprofiles, insbesondere eines Kunststoffrohres, mit
einem Extrusionswerkzeug (100) mit einem die Extrusionsachse (120) umgebenden Schmelzekanal (114),
einem den Schmelzekanal (114) mit Kunststoffschmelze speisenden Extruder sowie
einer Absaugvorrichtung zum Absaugen von Luft durch das Profilinnere entgegen der Extrusionsrichtung,
wobei der Extruder das Extrusionswerkzeug (100) zentral auf der Extrusionsachse (120) speist und die Absaugvorrichtung ein innerhalb des Schmelzekanals (114) angeordnetes zentrales Absaugrohr (140) sowie Teilstromabsaugkanäle (144) umfasst, welche sich in Absaugrichtung an das zentrale Absaugrohr (140) anschließen und aus dem Inneren des Extrusionswerkzeuges (100) herausführen,
wobei das Extrusionswerkzeug (100) einen Wendelverteiler (102) umfasst und die Teilstromabsaugkanäle (144) in im Wendelverteiler (102) vorgesehenen Versorgungsbohrungen (146, 146') verlaufen.

2. Vorrichtung nach Anspruch 1, wobei die Absaugvorrichtung eine Absaugeinheit zur Erzeugung eines Luftstromes durch das Profilinnere umfasst.

3. Vorrichtung nach Anspruch 2, wobei die Teilstromabsaugkanäle (144) in einen Sammelabsaugkanal (148) münden, der mit der Absaugeinheit verbunden ist.

4. Vorrichtung nach Anspruch 2 oder 3, wobei eine Regelvorrichtung zum Regeln der Leistung der Absaugeinheit in Abhängigkeit von der Temperatur des Luftstromes vorgesehen ist.

5. Vorrichtung nach Anspruch 4, mit wenigstens einem innerhalb des Luftstromes angeordneten Temperatursensor (160), welcher mit der Regelvorrichtung in Verbindung steht.

6. Verfahren zum Erzeugen eines hohlen Kunststoffprofiles, insbesondere eines Kunststoffrohres, mit einem Extrusionswerkzeug (100) umfassend
Einspeisen von Kunststoffschmelze in ein einen Wendelverteiler (102) umfassendes Extrusionswerkzeug (100),
Verteilen der Kunststoffschmelze mittels des Wendelverteilers (102) in einen die Extrusionsachse (120) umgebenden und ein Hohlprofil bildenden Schmelzekanal (114) des Extrusionswerkzeugs (100) sowie
Absaugen von Luft entgegen der Extrusionsrichtung durch das Profilinnere,
wobei das Einspeisen in das Extrusionswerkzeug (100) zentral auf der Extrusionsachse (120) erfolgt und das Absaugen durch ein innerhalb des Schmelzekanals (114) angeordnetes zentrales Absaugrohr (140) sowie durch Teilstromabsaugkanäle (144), welche in im Wendelverteiler (102) vorgesehenen Versorgungsbohrungen (146, 146') verlaufen und aus dem Inneren des Extrusionswerkzeuges (100) herausführen, erfolgt.

## Claims

1. A device for producing a hollow plastic profile, in particular a plastic tube, with
an extrusion die (100) with a melt channel (114) surrounding the extrusion axis (120),
an extruder feeding the melt channel (114) with plastic melt and
a suction device for the suctioning of air through the interior of the profile contrary to the extrusion direction,
wherein the extruder feeds the extrusion die (100) centrally on the extrusion axis (120) and the suctioning device comprises a central suction tube (140) arranged within the melt channel (114) and partial flow suction channels (144), which adjoin the central suction tube (140) in the suctioning direction and lead out from the interior of the extrusion die (100),
wherein the extrusion die (100) comprises a spiral distributor (102) and the partial flow suction channels (144) run in supply bores (146, 146') provided in the spiral distributor (102).

2. The device according to Claim 1, wherein the suction device comprises a suction unit for generating an air stream through the interior of the profile.

3. The device according to Claim 2, wherein the partial flow suction channels (144) open into a collecting suction channel (148), which is connected with the suction unit.

4. The device according to Claim 2 or 3, wherein a regulating device is provided for regulating the output of the suction unit as a function of the temperature of the air stream.

5. The device according to Claim 4, with at least one temperature sensor (160) arranged within the air stream, which temperature sensor is connected with the regulating device.

6. A method for producing a hollow plastic profile, in particular a plastic tube, with an extrusion die (100) comprising
feeding plastic melt into an extrusion die (100) comprising a spiral distributor (102),
distributing the plastic melt by means of the spiral distributor (102) into a melt channel (114) of the extrusion die (100) surrounding the extrusion axis (120) and forming a hollow profile and
suctioning of air contrary to the extrusion direction through the interior of the profile,
wherein the feeding into the extrusion die (100) takes place centrally on the extrusion axis (120) and the suctioning takes place through a central suction tube (140) arranged within the melt channel (114) and through partial suction channels (144), which run in supply bores (146, 146') provided in the spiral distributor (102) and lead out from the interior of the extrusion die (100).

## Revendications

1. Dispositif de fabrication d'un profilé creux en matière plastique, en particulier d'un tube en plastique, comprenant
un outil d'extrusion (100) comprenant un canal de coulée (114) entourant l'axe d'extrusion (120),
une extrudeuse alimentant le canal de coulée (114) en fonte de plastique ainsi
qu'un dispositif d'extraction pour extraire l'air à travers l'intérieur du profilé inversement au sens d'extrusion,
sachant que l'extrudeuse alimente l'outil d'extrusion (100) de façon centrale sur l'axe d'extrusion (120) et le dispositif d'extraction comprend un tube d'extraction central (140) ainsi que des canaux d'extraction de courant partiel (144) qui se raccordent sur le tube d'extraction central (140) dans le sens d'extraction et conduisent à l'extérieur de l'outil d'extrusion (100),
sachant que l'outil d'extrusion (100) comprend un distributeur hélicoïdal (102) et les canaux d'extraction de courant partiel (144) passent dans des alésages d'alimentation (146, 146') prévus dans le distributeur hélicoïdal (102).

2. Dispositif selon la revendication 1, dans lequel le dispositif d'extraction comprend une unité d'extraction pour produire un flux d'air à travers l'intérieur du profilé.

3. Dispositif selon la revendication 2, dans lequel les canaux d'extraction de courant partiel (144) débouchent dans un canal d'extraction collecteur (148) qui est relié à l'unité d'extraction.

4. Dispositif selon la revendication 2 ou 3, dans lequel un dispositif de réglage est prévu pour régler la puissance de l'unité d'extraction en fonction de la température du flux d'air.

5. Dispositif selon la revendication 4, comprenant au moins un capteur de température (160) disposé à l'intérieur du flux d'air, lequel est en liaison avec le dispositif de réglage.

6. Procédé de fabrication d'un profilé creux en matière plastique, en particulier d'un tube en plastique, avec un outil d'extrusion (100) comprenant
l'alimentation de fonte de plastique dans un outil d'extrusion (100) comprenant un distributeur hélicoïdal (102),
la distribution de la fonte de plastique via le distributeur hélicoïdal (102) dans un canal de coulée (114) entourant l'axe d'extrusion (120) et formant un profilé creux, ainsi que
l'extraction de l'air inversement au sens d'extrusion à travers l'intérieur du profilé,
sachant que l'alimentation dans l'outil d'extrusion (100) s'effectue de façon centrale sur l'axe d'extrusion (120) et que l'extraction s'effectue par un tube d'extraction central (140) disposé à l'intérieur du canal de coulée (114) ainsi que par des canaux d'extraction de courant partiel (144) qui passent dans des alésages d'alimentation (146, 146') prévus dans le distributeur hélicoïdal (102) et conduisent à l'extérieur de l'outil d'extrusion (100).
